# FASCICULE DE BREVET EUROPEEN

(11) **EP 0 918 594 B1**
(45) Date de publication et mention de la délivrance du brevet: **03.05.2000**
(21) Numéro de dépôt: 97933707.8
(22) Date de dépôt: 11.07.1997
(51) Int. Cl.: B23Q 11/00, B23Q 11/10

(54) **DISPOSITIF POUR ENLEVER LES COPEAUX PROJETES PAR LA TETE D'USINAGE D'UNE MACHINE-OUTIL**
VORRICHTUNG ZUM ENTFERNEN VON SPÄNEN DES BEARBEITUNGSKOPFS EINER WERKZEUGMASCHINE
DEVICE FOR REMOVING CHIPS PRODUCED BY THE MACHINING HEAD OF A MACHINE TOOL

(30) Priorité: 19.07.1996 FR 9609069
(43) Date de publication de la demande: 02.06.1999
(73) Titulaire: RENAULT, 92109 Boulogne-Billancourt (FR)
(72) Inventeur: LECORNET, Alain, F-62640 Montigny en Gohelle (FR); LOKIETEK, Bernard, F-62790 Leforest (FR); MEUNIER, Jean-Michel, F-93700 Drancy (FR); ROCHER, Jean-Paul, F-78990 Elancourt (FR)
(86) Numéro de dépôt international: FR9701274
(87) Numéro de publication internationale: WO9803301

(56) Documents cités:
- DE-A- 4 132 822
- GB-A- 841 630
- PATENT ABSTRACTS OF JAPAN vol. 013, no. 244 (M-834), 7 juin 1989 & JP 01 051252 A (HITACHI LTD), 27 février 1989,
- PATENT ABSTRACTS OF JAPAN vol. 010, no. 151 (M-483), 31 mai 1986 & JP 61 004644 A (MITSUBISHI DENKI KK), 10 janvier 1986,

## Description

La présente invention se rapporte aux machines outils et vise plus particulièrement un dispositif selon le préambule de la revendication 1 permettant d'enlever et d'évacuer les copeaux formés et projetés lors de l'usinage d'une pièce; voir "PATENT ABSTRACTS OF JAPAN", Vol. 103, no. 244 (M-834) & JP 01 051252.

Classiquement les copeaux créés lors de l'usinage d'une pièce sont chassés de la zone de l'outil de coupe par des jets de liquide provenant de buses directionnels disposées à proximité et orientées vers l'outil et le porte-outils. Les copeaux entraînés par le liquide sont alors recueillis avec ce dernier dans un carter d'évacuation disposé dans la partie inférieure de la machine outil.

Toutefois, de tels dispositifs présentent l'inconvénient de laisser s'accumuler les copeaux sous forme d'agglomérat dans les multiples zones de projection non arrosées par les jets de liquide. Ces agglomérats sont particulièrement importants lors de l'usinage à haute vitesse de matériaux tels que les matériaux à base d'aluminium pour lesquels les copeaux, de petites tailles, sont projetés dans tout l'espace entourant l'outil et la pièce à usiner. Les agglomérats de copeaux durcis et collés sur les parois environnantes se détachent alors de manière aléatoire et viennent perturber l'usinage de la pièce en cours, nécessitant l'arrêt et le nettoyage de la machine outil.

Il est connu, pour remédier à cet inconvénient de multiplier le nombre de buses pulvérisant le liquide et d'orienter les buses en direction des points d'accumulation de copeaux les plus importants.

Cette solution entraîne la multiplication des tuyauteries d'amenée de liquide et l'augmentation de l'encombrement et du poids du dispositif avec tous les inconvénients que cela entraîne lorsque que celui-ci doit être fixé sur des capots démontables pour l'intervention de la maintenance. Par ailleurs, la multiplication des buses de pulvérisation de liquide entraîne une augmentation de la consommation en liquide et ne permet que le déplacement des zones d'accumulation de copeaux, ces derniers venant toujours se regrouper derrière les buses.

Le but de la présente invention est donc d'enlever les copeaux projetés par une machine outil à l'aide d'un dispositif qui soit peut encombrant, simple à installer et sans possibilité de déréglage, économique en consommation de liquide, efficace dans un grand rayon d'action et qui soit simple et économique à réaliser.

Le dispositif pour enlever les copeaux projetés par la tête d'usinage d'une machine outil selon l'invention comprend au moins une arrivée de liquide sous pression reliée à des moyens distributeurs aptes à arroser la machine-outil pour entraîner les copeaux avec le liquide vers une bouche d'évacuation.

Le dispositif pour enlever les copeaux projetés par la tête d'usinage d'une machine outil comporte des moyens distributeurs, réalisés par au moins une buse du type multidirectionnelle apte à pulvériser le liquide dans tout un volume d'arrosage adapté, ce volume comprenant les principales zones de dépôt des projections de copeaux.

Selon l'invention, la tête étant montée mobile de façon à ce que les jets balayent périodiquement la totalité du volume.

Selon une autre caractéristique de l'invention, la buse multidirectionnelle comporte une tête rotative.

Selon une autre caractéristique de l'invention, la tête rotative est du type autotournante, le couple engendré par la pulvérisation du liquide entraînant en rotation la tête.

Selon encore une autre caractéristique de l'invention, la tête rotative est de forme sphérique et comporte de multiples orifices orientés tangentiellement.

Selon une autre caractéristique de l'invention, la tête rotative est de type tourniquet.

Selon une autre caractéristique de l'invention, la buse multidirectionnelle est disposée de façon à arroser directement l'outil sous l'angle le plus favorable.

Selon une autre caractéristique de l'invention, la tête d'usinage de la machine outil, la pièce et la buse multidirectionnelle sont disposées dans une même enceinte fermée.

Selon une autre caractéristique de l'invention, la machine outil est une machine à usiner à haute vitesse et à grande vitesse de déplacements.

Selon une autre caractéristique de l'invention, le liquide sous pression est de l'huile soluble qui est pulvérisé par la buse multidirectionnelle pendant toute la durée de l'usinage.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
la figure 1 est une représentation schématique en perspective d'un dispositif pour enlever les copeaux projetés par une machine outil selon l'invention ;
la figure 2 est une vue de face d'une buse multidirectionnelle pouvant être utilisée pour le dispositif selon l'invention;

Pour faciliter la lecture des dessins, les mêmes pièces portent les mêmes références d'une figure à l'autre. Par ailleurs, seuls les éléments nécessaires à la compréhension de l'invention ont été figurés.

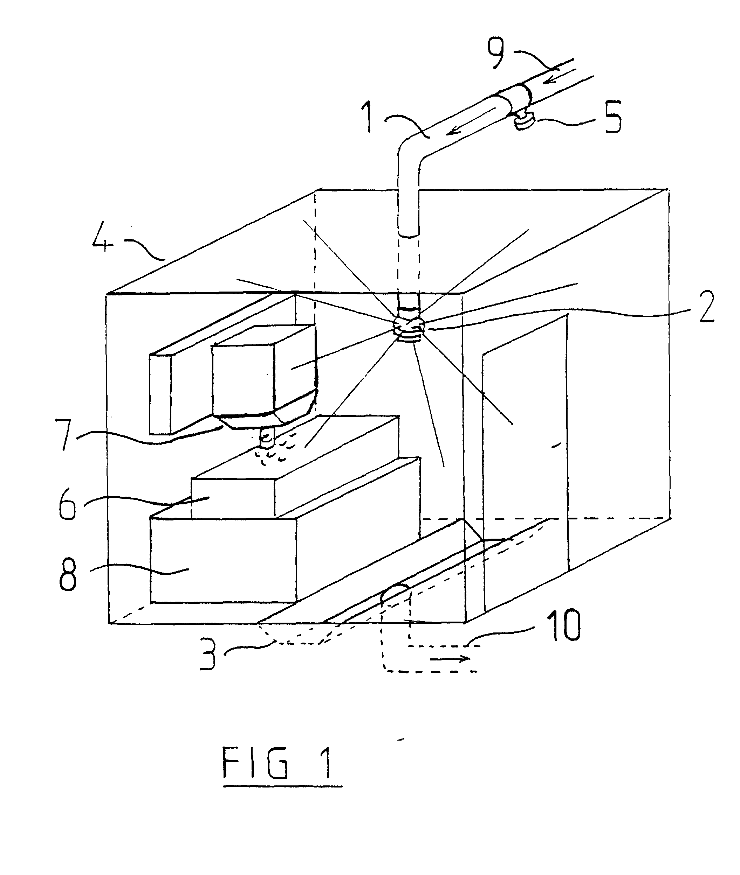

Le dispositif pour enlever les copeaux représenté sur la figure 1 est constitué d'une tuyauterie 1 reliée d'une part à un réseau général 9, fournissant du liquide d'arrosage d'outil tel que de l'huile soluble sous une pression minimum de 2 bars, et d'autre part à une buse d'arrosage multidirectionnelle 2 de type autotournante, disposée à l'intérieur d'une enceinte 4, et pulvérisant du liquide sur 360°.

L'enceinte 4 contient une machine outil comportant un montage porte-pièce 8 et une tête d'usinage 7 pouvant produire de nombreux copeaux lors de l'usinage d'une pièce 6. La machine outil possède dans sa partie inférieure une goulotte 3 de récupération du liquide d'arrosage et des copeaux. Cette goulotte 3 disposée au niveau le plus bas de l'enceinte 4 et reliée à une tuyauterie d'évacuation 10 peut par exemple posséder des plans inclinés de part et d'autre de son ouverture afin d'améliorer la récupération du liquide et des copeaux.

Selon le mode particulier de réalisation du dispositif pour enlever les copeaux présenté sur la figure 1, l'enceinte 4 est fermée de façon à limiter les projections de copeaux et de liquide d'arrosage à un volume donné, ce volume étant adapté de façon à permettre une maintenance aisée des éléments de la machine outil tels que la tête d'usinage 7 et le montage porte-pièce 8.

La position et la longueur de la tuyauterie 1 présente dans l'enceinte 4 sont adaptées de façon à ce que la buse multidirectionnelle 2 disposée à l'extrémité de la tuyauterie 1 soit suffisamment dégagée pour permettre l'arrosage direct d'un volume maximum de l'enceinte 4.

Par ailleurs, l'emplacement de la buse multidirectionnelle 2 peut être choisi de façon à privilégier l'arrosage de la tête d'usinage 7, de la pièce 6 à usiner et du montage porte-pièce 8. Ainsi, la buse multidirectionnelle 2 pourra par exemple être disposée dans la partie supérieure de l'enceinte 4 de façon à arroser la zone d'usinage selon un angle favorable à l'entraînement d'un maximum de copeaux en direction de la goulotte de récupération 3.

A l'extérieur de l'enceinte 4, une vanne électrique 5 est disposée sur la tuyauterie 1 en aval du raccordement au réseau général fournissant le liquide d'arrosage. Cette vanne électrique 5 est reliée à l'automate de commande de la machine outil de façon à rendre la pulvérisation de liquide dans l'enceinte 4 simultanée à l'usinage de la pièce 6.

Un tel dispositif permet de régler simplement le problème des dépôts de copeaux dans la zone d'usinage d'une machine outil. Ce dispositif est particulièrement efficace dans le cas des usinages à haute vitesse produisant de nombreux copeaux de petites tailles se retrouvant projetés dans tout l'espace environnant.

En effet, contrairement au dispositifs classiques à buses directionnelles, la pulvérisation du liquide par la buse multidirectionnelle 2 accompagnée de la réflexion des jets de liquide sur les parois de l'enceinte 4 permet un arrosage complet du volume de l'enceinte 4. Ainsi, les copeaux projetés dans tout le volume de l'enceinte 4 sont rapidement arrosés et entraînés par le liquide en direction de la goulotte d'évacuation 3. L'emploi d'une buse multidirectionnelle 2 autotournante permet en plus d'avoir une projection saccadée de liquide en un point donné de l'enceinte 4 qui contribue à augmenter l'efficacité du jet à décoller les copeaux des parois.

Un tel dispositif permet avec une seule buse multidirectionnelle 2 d'avoir une efficacité supérieure à un dispositif classique multipliant les buses directionnelles tout en ayant une consommation de liquide inférieure. Le dispositif selon l'invention présente également l'avantage d'être simple à installer puisque celui ne nécessite qu'une unique tuyauterie d'amené de liquide.

Bien entendu, la figure 1 ne présente qu'un mode particulier de réalisation du dispositif pour enlever les copeaux selon l'invention et l'on peut envisager de remplacer l'enceinte 4 par un carénage adapté de certaines zones permettant de limiter la projection des copeaux ou de liquide.

Il est aussi envisageable de multiplier le nombre de buses multidirectionnelles 2 afin d'adapter le volume d'arrosage à la machine outil. De même la pression d'alimentation de la tuyauterie 1 en liquide d'arrosage et le débit de la buse multidirectionnelle 2 seront choisis en fonction de la quantité et de la nature des copeaux produit par la tête d'usinage 7 de la machine outil.

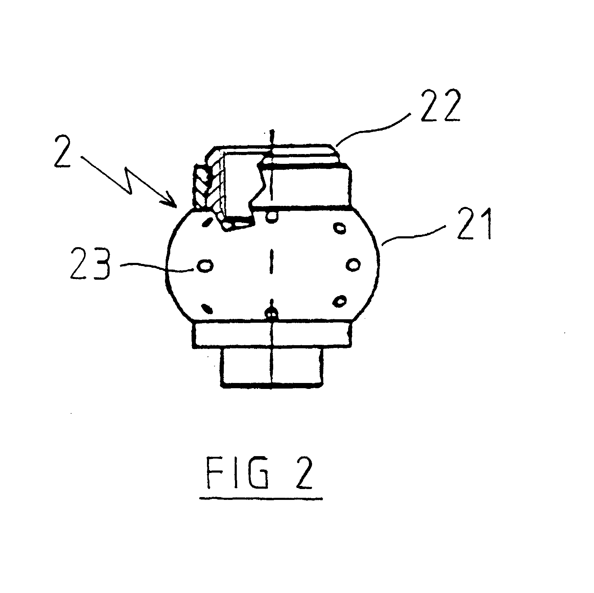

La figure 2 présente une buse multidirectionnelle pouvant être utilisée pour le dispositif pour enlever les copeaux selon l'invention. Cette buse de type autotournante, p.e. de référence 583.269.55, distribuée par la société LECHLER présente une bague 21 montée en rotation autour d'un corps 22. La bague 21 est percée d'orifices 23 permettant la pulvérisation du liquide tout en entraînant en rotation la bague 21. La pulvérisation du liquide par les multiples orifices 23 associée à la rotation de la bague permet d'obtenir une projection de liquide dans tout l'espace environnant la buse multidirectionnelle 2.

Bien entendu, l'invention n'est nullement limitée aux modes de réalisation décrits et illustrés qui n'ont été donnés qu'à titre d'exemple.

Ainsi la buse de la figure 2 peut être remplacée par tout autre type de buse multidirectionnelle comme par exemple une buse à tête de type tourniquet.

## Revendications

1. Dispositif pour enlever les copeaux projetés par la tête d'usinage (7) d'une machine outil, du type comportant au moins une arrivée (1) de liquide sous pression reliée à des moyens distributeurs (2) aptes à arroser la machine-outil pour entraîner les copeaux avec le liquide vers un moyen d'évacuation (3), lesdits moyens distributeurs étant réalisés par au moins une buse du type multidirectionnelle (2) apte à pulvériser le liquide dans tout un volume d'arrosage adapté, ledit volume comprenant les principales zones de dépôt des projections de copeaux, ladite buse multidirectionnelle (2) comporte une tête présentant des orifices (23) pulvérisant des jets de liquide sensiblement rectilignes, caractérisé en ce que ladite tête étant montée mobile de façon à ce que lesdits jets balayent périodiquement la totalité dudit volume.

2. Dispositif pour enlever les copeaux projetés par la tête d'usinage (7) d'une machine outil selon la revendication 1, caractérisé en ce que ladite buse multidirectionnelle (2) comporte une tête rotative (21).

3. Dispositif pour enlever les copeaux projetés par la tête d'usinage (7) d'une machine outil selon la revendication 2, caractérisé en ce que ladite tête rotative (21) est du type autotournante, le couple engendré par la pulvérisation du liquide entraînant en rotation ladite tête.

4. Dispositif pour enlever les copeaux projetés par la tête d'usinage (7) d'une machine outil selon la revendication 3, caractérisé en ce que ladite tête rotative est de forme sphérique et comporte de multiples orifices (23) orientés tangentiellement.

5. Dispositif pour enlever les copeaux projetés par la tête d'usinage (7) d'une machine outil selon l'une quelconque des revendications 2 à 3, caractérisé en ce que ladite tête rotative est de type tourniquet.

6. Dispositif pour enlever les copeaux projetés par la tête d'usinage (7) d'une machine outil selon l'une quelconque des revendications 1 à 5, caractérisé en ce que ladite buse multidirectionnelle (2) est disposée de façon à arroser directement l'outil sous l'angle le plus favorable.

7. Dispositif pour enlever les copeaux projetés par la tête d'usinage (7) d'une machine outil selon l'une quelconque des revendications 1 à 6, caractérisé en ce la tête d'usinage (7), la pièce (6) et la buse multidirectionnelle (2) sont disposées dans une même enceinte (4) fermée.

8. Dispositif pour enlever les copeaux projetés par la tête d'usinage (7) d'une machine outil selon l'une quelconque des revendications 1 à 7, caractérisé en ce que ladite machine outil est une machine à usiner à haute vitesse.

9. Dispositif pour enlever les copeaux projetés par la tête d'usinage (7) d'une machine outil selon l'une quelconque des revendications 1 à 8, caractérisé en ce que le liquide sous pression est de l'huile soluble qui est pulvérisé par la buse multidirectionnelle pendant toute la durée de l'usinage.

## Patentansprüche

1. Vorrichtung zur Abfuhr von Spänen, die vom Bearbeitungskopf (7) einer Werkzeugmaschine stammen, mit wenigstens einer Zufuhrleitung (1) für eine unter Druck stehende Flüssigkeit, die mit einer Verteileranordnung (2) verbunden ist zur Besprühung der Werkzeugmaschine, um die Späne zusammen mit der Flüssigkeit einer Abfuhranordnung (3) zuzuführen, wobei die Verteileranordnung die Form mindestens einer Vielfachsprühdüse (2) aufweist, um die Flüssigkeit in einem gesamten entsprechenden Sprühvolumen zu verteilen, welches die wesentlichen Ablagebereiche der erzeugten Späne umfaßt und wobei die Vielfachsprühdüse (2) einen Kopf mit Sprühöffnungen (23) aufweist, aus denen im wesentlichen geradlinige Flüssigkeitsstrahlen austreten, dadurch gekennzeichnet, dass der Kopf derart beweglich anordnet ist, dass die Strahlen periodisch das gesamte Volumen überstreichen.

2. Vorrichtung zur Abfuhr von Spänen, die vom Bearbeitungskopf (7) einer Werkzeugmaschine stammen nach Anspruch 1, dadurch gekennzeichnet, dass die Vielfachsprühdüse (2) einen drehbaren Kopf (21) aufweist.

3. Vorrichtung zur Abfuhr von Spänen, die vom Bearbeitungskopf (7) einer Werkzeugmaschine stammen nach Anspruch 2, dadurch gekennzeichnet, dass der drehbare Kopf (21) selbstdrehend ist, wobei das Drehmoment für die Drehung des Kopfes durch das Versprühen der Flüssigkeit erzeugt wird.

4. Vorrichtung zur Abfuhr von Spänen, die vom Bearbeitungskopf (7) einer Werkzeugmaschine stammen nach Anspruch 2, dadurch gekennzeichnet, dass der drehbare Kopf Kugelform aufweist und mit einer Vielzahl von tangential ausgerichteten Öffnungen (23) versehen ist.

5. Vorrichtung zur Abfuhr von Spänen, die vom Bearbeitungskopf (7) einer Werkzeugmaschine stammen nach Ansprüchen 2 und 3, dadurch gekennzeichnet, dass der drehbare Kopf ein Drehregner ist.

6. Vorrichtung zur Abfuhr von Spänen, die vom Bearbeitungskopf (7) einer Werkzeugmaschine stammen nach Ansprüchen 1 bis 5, dadurch gekennzeichnet, dass die Vielfachsprühdüse (2) derart angeordnet ist, dass das Werkzeug unter dem bestmöglichen Winkel direkt besprüht wird.

7. Vorrichtung zur Abfuhr von Spänen, die vom Bearbeitungskopf (7) einer Werkzeugmaschine stammen nach Ansprüchen 1 bis 6, dadurch gekennzeichnet, dass der Bearbeitungskopf (7), das Werkstück (6) und die Vielfachsprühdüse (2) in demselben geschlossenen Raum (4) angeordnet sind.

8. Vorrichtung zur Abfuhr von Spänen, die vom Bearbeitungskopf (7) einer Werkzeugmaschine stammen nach Ansprüchen 1 bis 7, dadurch gekennzeichnet, dass die Werkzeugmaschine eine Hochgeschwindigkeits-Werkzeugmaschine ist.

9. Vorrichtung zur Abfuhr von Spänen, die vom Bearbeitungskopf (7) einer Werkzeugmaschine stammen nach Ansprüchen 1 bis 8, dadurch gekennzeichnet, dass die unter Druck stehende Flüssigkeit ein emulgierbares Öl ist, das durch die Vielfachsprühdüse während der gesamten Bearbeitungsdauer versprüht wird.

## Claims

1. Device for removing shavings projected by the machining head (7) of a machine tool, of the type comprising at least one inlet (1) for pressurised liquid connected to distributing means (2) capable of spraying the machine tool in order to wash the shavings away with the liquid towards a drainage means (3), said distributing means being formed by at least one nozzle of the multidirectional type (2) capable of atomising the liquid in the whole of a suitable spraying volume, said volume including the main areas of deposition of the shavings projected, said multidirectional nozzle (2) comprising a head having orifices (23) atomising substantially rectilinear jets of liquid, characterised in that said head is movably mounted such that said jets periodically sweep the entirety of said volume.

2. Device for removing the shavings projected by the machining head (7) of a machine tool according to claim 1, characterised in that said multidirectional nozzle (2) comprises a rotating head (21).

3. Device for removing the shavings projected by the machining head (7) of a machine tool according to claim 2, characterised in that said rotating head (21) is of the automatically rotating type, the torque produced by the atomisation of the liquid making the head rotate.

4. Device for removing the shavings projected by the machining head (7) of a machine tool according to claim 3, characterised in that said rotating head is of spherical shape and comprises multiple orifices (23) orientated tangentially.

5. Device for removing the shavings projected by the machining head (7) of a machine tool according to any one of claims 2 to 3, characterised in that said rotating head is of the turnstile type.

6. Device for removing the shavings projected by the machining head (7) of a machine tool according to any one of claims 1 to 5, characterised in that said multidirectional nozzle (2) is arranged such as to directly spray the tool at the most favourable angle.

7. Device for removing the shavings projected by the machining head (7) of a machine tool according to any one of claims 1 to 6, characterised in that the machining head (7), the workpiece (6) and the multidirectional nozzle (2) are arranged in a common sealed enclosure (4).

8. Device for removing the shavings projected by the machining head (7) of a machine tool according to any one of claims 1 to 7, characterised in that said machine tool is a machine for high-speed machining.

9. Device for removing the shavings projected by the machining head (7) of a machine tool according to any one of claims 1 to 8, characterised in that the pressurised liquid is soluble oil which is atomised by the multidirectional nozzle during the whole of the duration of machining.
